# EUROPÄISCHE PATENTSCHRIFT

(11) **EP 2 723 577 B1**
(45) Veröffentlichungstag und Bekanntmachung des Hinweises auf die Patenterteilung: **30.10.2019**
(21) Anmeldenummer: 12730803.9
(22) Anmeldetag: 21.06.2012
(51) Int. Cl.: C09D 11/037, C09D 11/101

(54) **MAGNETISCHE SIEBDRUCKFARBE ODER FLEXODRUCKFARBE UND DAMIT BEDRUCKTES SICHERHEITSELEMENT**
MAGNETIC SCREEN PRINTING INK OR FLEXOGRAPHIC INK AND SECURITY ELEMENT PRINTED USING THE SAME
ENCRE DE SÉRIGRAPHIE MAGNÉTIQUE OU ENCRE D'IMPRESSION FLEXOGRAPHIQUE MAGNÉTIQUE ET ÉLÉMENT DE SÉCURITÉ IMPRIMÉ AVEC

(30) Priorität: 22.06.2011 DE 102011105396
(43) Veröffentlichungstag der Anmeldung: 30.04.2014
(73) Patentinhaber: Giesecke+Devrient Currency Technology GmbH, 81677 München (DE)
(72) Erfinder: MENGEL, Christoph, 83607 Holzkirchen (DE); VOIT, Max, 83671 Benediktbeuern (DE); PAUL, Elisabeth, 83064 Raubling (DE); SCHÜTZMANN, Jürgen, 85276 Pfaffenhofen (DE)
(86) Internationale Anmeldenummer: PCT/EP2012/002629
(87) Internationale Veröffentlichungsnummer: WO 2012/175212

(56) Entgegenhaltungen:
- EP-A2- 0 915 385
- EP-A2- 1 806 238
- WO-A2-2009/074284
- DE-A1-102007 043 052

## Beschreibung

Die Erfindung betrifft eine magnetische Siebdruckfarbe oder Flexodruckfarbe mit einem Bindemittel und magnetisch ausrichtbaren, plättchenförmigen Magnetpigmenten. Die Erfindung betrifft auch ein Sicherheitselement, das mit einer solchen magnetischen Siebdruckfarbe oder Flexodruckfarbe bedruckt ist.

Datenträger, wie Wert- oder Ausweisdokumente, aber auch andere Wertgegenstände, wie etwa Markenartikel, werden zur Absicherung oft mit Sicherheitselementen versehen, die eine Überprüfung der Echtheit des Datenträgers gestatten und die zugleich als Schutz vor unerlaubter Reproduktion dienen. Die Sicherheitselemente können beispielsweise in Form eines in eine Banknote eingebetteten Sicherheitsfadens, einer Abdeckfolie für eine Banknote mit Loch, eines aufgebrachten Sicherheitsstreifens, eines selbsttragenden Transferelements oder auch in Form eines direkt auf ein Wertdokument aufgedruckten Merkmalsbereichs ausgebildet sein.

Eine besondere Rolle bei der Echtheitsabsicherung spielen Sicherheitselemente, die betrachtungswinkelabhängige visuelle Effekte zeigen, da diese selbst mit modernsten Kopiergeräten nicht reproduziert werden können. Für diesen Zweck werden seit einiger Zeit auch magnetisch ausrichtbare Effektpigmente eingesetzt, die magnetisch in Form eines darzustellenden Motivs ausgerichtet sind, wie beispielsweise in der Druckschrift WO 2009/033601 A1 beschrieben.

Ausgehend davon liegt der Erfindung die Aufgabe zugrunde, die Fälschungssicherheit von Sicherheitselementen mit magnetisch ausrichtbaren Magnetpigmenten zu erhöhen.

Diese Aufgabe wird durch die Merkmale der unabhängigen Ansprüche gelöst. Weiterbildungen der Erfindung sind Gegenstand der Unteransprüche.

Gemäß der Erfindung enthält eine gattungsgemäße magnetische Siebdruckfarbe oder Flexodruckfarbe neben dem Bindemittel zumindest zwei unterschiedliche magnetisch ausrichtbare, plättchenförmige Magnetpigmente, die sich in zumindest einem der charakteristischen Parameter Eigenfarbe, Koerzitivfeldstärke, Remanenz und NIR (Nahinfrarot)-Remission signifikant unterscheiden. Insbesondere weisen die Magnetpigmente je nach dem unterscheidenden Parameter eine Eigenfarbe mit visuell unterschiedlichem Farbton, eine um einen Faktor 1,5 oder mehr unterschiedliche Koerzitivfeldstärke, eine um einen Faktor 1,5 oder mehr unterschiedliche Remanenz und/oder eine sich um 10% oder mehr unterscheidende integrale NIR-Remission in einem Teilbereich einer Breite von 50 nm auf, wobei der Teilbereich im Wellenlängenbereich von 800 nm bis 1500 nm liegt.

In einer bevorzugten ersten Erfindungsvariante ist ein erstes der unterschiedlichen Magnetpigmente im Wesentlichen optisch nicht variabel und ist insbesondere gold-, silber- oder kupferfarben, während ein zweites der unterschiedlichen Magnetpigmente optisch variabel ist. Das optisch variable Magnetpigment kann insbesondere opak sein und beispielsweise einen Farbkippeffekt von Grün nach Blau, Gold nach Grün oder Magenta nach Grün aufweisen. Durch die Kombination des optisch variablen Magnetpigments mit einem im Wesentlichen optisch nicht variablen Magnetpigment kann die Farbpalette des Farbkippeffekts des optisch variablen Magnetpigments variiert und das Farbspiel erweitert werden. Zudem kann durch die Kombination die maschinelle Nachweisbarkeit, insbesondere der magnetisehe Nachweis speziell der Ausrichtung der Magnetpigmente verbessert werden.

Die gewählte Formulierung, nach der ein erstes der unterschiedlichen Magnetpigmente im Wesentlichen optisch nicht variabel ist, trägt dabei der Tatsache Rechnung, dass bei solchen Magnetpigmenten im Wesentlichen kein oder nur ein vernachlässigbarer Farbkippeffekt vorhanden ist.

Bei einer zweckmäßigen Ausgestaltung dieser Erfindungsvariante weist das erste Magnetpigment bei einer Wellenlänge von 800 nm und bei einer Wellenlänge von 1200 nm jeweils eine NIR-Remission auf, die um 10% oder mehr, insbesondere um 20% oder mehr, höher ist als die NIR-Remission des zweiten Magnetpigments.

Nach einer anderen, ebenfalls vorteilhaften Ausgestaltung der ersten Erfindungsvariante weist das erste Magnetpigment bei einer Wellenlänge von 800 nm eine um mehr als 10%, vorzugsweise um mehr als 20% höhere NIR-Remission auf als das zweite Magnetpigment, während die NIR-Remission bei einer Wellenlänge von 1200 nm um mehr als 10%, vorzugsweise um mehr als 20% geringer ist als die des zweiten Magnetpigments.

Bei einer vorteilhaften zweiten Erfindungsvariante ist im Wesentlichen keines der Magnetpigmente optisch variabel, auch wenn die Farbgebung der Pigmente auf Interferenzeffekten beruhen kann. Insbesondere ist in der zweiten Erfindungsvariante ein erstes der unterschiedlichen Magnetpigmente metallfarben, insbesondere gold-, silber- oder kupferfarben und ein zweites der unterschiedlichen Magnetpigmente ist ebenfalls metallfarben, insbesondere gold-, silber- oder kupferfarben. Durch die Kombination der beiden unterschiedlichen Magnetpigmente können einerseits neuartige Farbtöne erzielt werden und andererseits kann die maschinelle Nachweisbarkeit, insbesondere der magnetische Nachweis der Ausrichtung der Magnetpigmente verbessert werden.

In einer zweckmäßigen Ausgestaltung der zweiten Erfindungsvariante weist das erste Magnetpigment bei einer Wellenlänge von 800 nm und bei einer Wellenlänge von 1200 nm jeweils eine um mehr als 10%, vorzugsweise um mehr als 20% höhere NIR-Remission auf als das zweite Magnetpigment.

Neben binären Pigmentmischungen mit zwei unterschiedlichen Magnetpigmenten können auch ternäre Pigmentmischungen vorteilhaft eingesetzt werden. Eine magnetische Siebdruckfarbe oder Flexodruckfarbe enthält in diesem Fall drei unterschiedliche Magnetpigmente, die sich paarweise in zumindest einem der charakteristischen Parameter Eigenfarbe, Koerzitivfeldstärke, Remanenz und NIR-Remission signifikant unterscheiden. Insbesondere weisen die Magnetpigmente paarweise eine Eigenfarbe mit visuell unterschiedlichem Farbton, eine um einen Faktor 1,5 oder mehr unterschiedliche Koerzitivfeldstärke, eine um einen Faktor 1,5 oder mehr unterschiedliche Remanenz und/oder eine sich um 10% oder mehr unterscheidende integrale NIR-Remission in einem Teilbereich einer Breite von 50 nm im Wellenlängenbereich von 800 nm bis 1500 nm auf.

In allen Ausgestaltungen enthält die Siebdruckfarbe oder Flexodruckfarbe mit Vorteil ein UV-härtendes Bindemittel. Nach einer Ausrichtung der Magnetpigmente durch ein externes Magnetfeld können diese dann durch Härten des Bindemittels in der gewünschten Lage fixiert werden.

Die Erfindung enthält weiter ein Sicherheitselement mit einem ersten Druckbereich, der mit einer ersten magnetischen Siebdruckfarbe oder Flexodruckfarbe der oben beschriebenen Art bedruckt ist. Dabei kann mit Vorteil vorgesehen sein, dass die Magnetpigmente der ersten magnetischen Siebdruckfarbe oder Flexodruckfarbe in dem ersten Druckbereich magnetisch ausgerichtet sind.

Gemäß einer vorteilhaften Weiterbildung der Erfindung enthält das Sicherheitselement neben dem ersten Druckbereich einen angrenzenden zweiten Druckbereich, wobei der erste Druckbereich mit der ersten magnetischen Siebdruckfarbe oder Flexodruckfarbe bedruckt und der zweite Druckbereich mit einer zweiten, unterschiedlichen magnetischen Siebdruckfarbe oder Flexodruckfarbe der oben beschriebenen Art bedruckt ist.

In einer besonders bevorzugten Erfindungsvariante weisen die beiden Druckbereiche visuell denselben Farbton auf, unterscheiden sich jedoch in ihrer NIR- Remission signifikant.

Insbesondere unterscheidet sich die integrale NIR-Remission der beiden Druckbereiche in einem Teilbereich einer Breite von 50 nm im Wellenlängenbereich von 800 nm bis 1500 nm um 10% oder mehr, vorzugsweise um 20% oder mehr.

In einer ebenfalls vorteilhaften Erfindungsvariante weisen die beiden Druckbereiche visuell denselben Farbton auf, unterscheiden sich jedoch in ihren Magneteigenschaften signifikant. Insbesondere unterscheiden sich die Koerzitivfeldstärke und/ oder die Remanenz der beiden Druckbereiche um 10% oder mehr, vorzugsweise um 20% oder mehr.

Die erste und zweite magnetische Siebdruckfarbe oder Flexodruckfarbe enthält dabei mit Vorteil als zweites Magnetpigment jeweils dasselbe optisch variable Magnetpigment. Als erstes Magnetpigment enthalten die beiden Siebdruckfarben oder Flexodruckfarben jeweils unterschiedliche, im Wesentlichen optisch nicht variable Magnetpigmente, insbesondere jeweils metallfarbene, vorzugsweise gold-, silber- oder kupferfarbene Magnetpigmente.

In einer speziellen Ausgestaltung enthalten die erste und zweite magnetische Siebdruckfarbe oder Flexodruckfarbe das zweite Magnetpigment jeweils im Wesentlichen im gleichen Anteil an der Gesamtmenge an Magnetpigment. Zumindest eine der Siebdruckfarben oder Flexodruckfarben kann zusätzlich ein Buntpigment oder einen Farbstoff enthalten, um die visuellen Farbtöne der beiden Druckbereiche einander möglichst gut anzugleichen. Die Magnetpigmente können in keinem, einem oder unter Umständen auch in beiden Druckbereichen magnetisch ausgerichtet sein.

Besonders attraktive Gestaltungen entstehen, wenn der erste und zweite Druckbereich passergenau aneinander stoßen. Vorzugsweise sind die beiden Druckbereiche in Form von Mustern, Zeichen oder einer Codierung angeordnet, wobei insbesondere der zweite Druckbereich den Innenbereich des ersten Druckbereichs bildet.

Auf diese Weise können die aus dem Stichtiefdruck bekannten IR-Farbschnitte auf den Siebdruck übertragen werden. Im Siebdruck können dabei, anders als im Stichtiefdruckverfahren, welches aufgrund der Schablonentechnik lediglich einfache IR-Schnitte erlaubt, auch komplexe bzw. figurative 2D-Farbschnitte realisiert werden.

Die Erfindung enthält auch ein Verfahren zum Herstellen eines Sicherheitselements der genannten Art, bei dem ein erster Druckbereich und ein angrenzender zweiter Druckbereich mit unterschiedlichen magnetischen Siebdruckfarben oder Flexodruckfarben, jeweils der oben beschriebenen Art bedruckt werden. Optional werden die Magnetpigmente der magnetischen Siebdruckfarben oder Flexodruckfarben in einem oder beiden Druckbereichen magnetisch ausgerichtet.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen. Die verschiedenen Ausführungsbeispiele sind nicht auf die Verwendung in der konkret beschriebenen Form beschränkt, sondern können auch untereinander kombiniert werden.

Es zeigen:
- Fig. 1: eine schematische Darstellung einer Banknote mit einem erfindungsgemäßen Sicherheitselement,
- Fig. 2: in (a) eine Aufsicht und in (b) einen Querschnitt des Sicherheitselements der Fig. 1,
- Fig. 3: schematisch eine Messkurve bei der maschinellen Erfassung der Kennzeichnung der Fig. 2(a) entlang der gestrichelt eingezeichneten Erfassungslinie, wobei das Messsignal in beliebigen Einheiten in Abhängigkeit vom Ort auf der Erfassungslinie angegeben ist,
- Fig. 4: in (a) und (b) jeweils im nahen Infrarot die Remission R einer Farbschicht mit nur einem ersten bzw. nur einem zweiten Magnetpigment (durchgezogene Kurven) und einer erfindungsgemäßen Farbschicht mit einer Pigmentmischung der ersten und zweiten Magnetpigmente (gestrichelte Kurve),
- Fig. 5: ein Sicherheitselement mit zwei farbtongleich bedruckten Druckbereichen nach einem weiteren Ausführungsbeispiel der Erfindung, und
- Fig. 6: ein Sicherheitselement nach noch einem weiteren Ausführungsbeispiel der Erfindung.

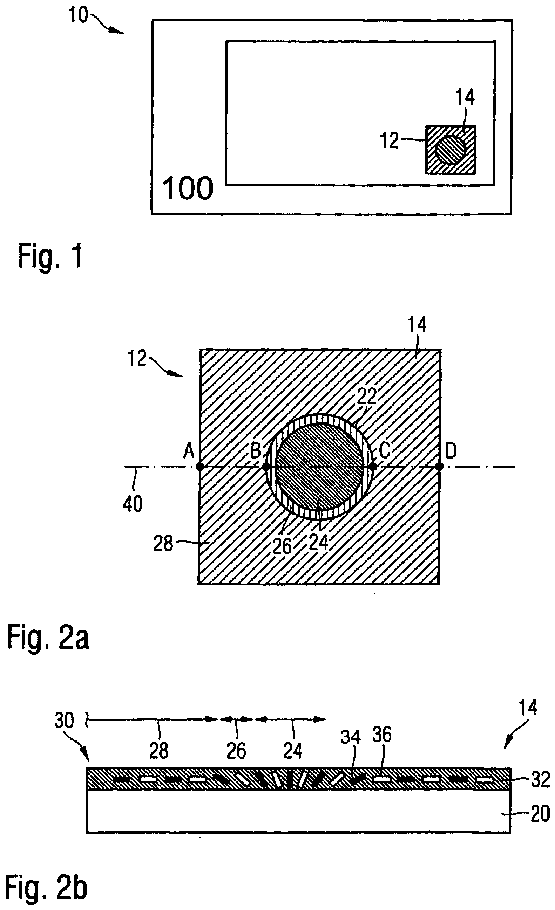

Die Erfindung wird nun am Beispiel einer Banknote erläutert. Figur 1 zeigt dazu eine schematische Darstellung einer Banknote 10 mit einem erfindungsgemäßen Sicherheitselement 12, das in einem Druckbereich 14 mit einer magnetischen Siebdruckfarbe nach der Erfindung bedruckt wurde. Der Druckbereich 14 ist in Fig. 2(a) in Aufsicht und in Fig. 2(b) im Querschnitt genauer dargestellt.

Mit Bezug auf die Figuren 2(a) und (b) wurde das Substrat 20 der Banknote zur Ausbildung des Sicherheitselements 12 in dem Druckbereich 14 mit einer magnetischen Siebdruckfarbe 30 bedruckt, die in einem UV-härtenden Bindemittel 32 zwei unterschiedliche, jedoch beide magnetisch ausrichtbare, plättchenförmige Magnetpigmente 34, 36 enthält. Die plättchenförmigen Magnetpigmente 34, 36 wurden im Ausführungsbeispiel durch einen Kugelmagneten in Form einer scharf abgegrenzten kreisförmigen Kennzeichnung 22 ausgerichtet und fixiert.

Zur Erzeugung dieser Kennzeichnung 22 wurde das Substrat 20 mit den in der ungehärteten Siebdruckfarbe 30 zunächst noch beweglichen Magnetpigmenten 34, 36 in geringem Abstand über einen Kugelmagneten gebracht.

Die sphärisch verlaufenden magnetischen Feldlinien des Kugelmagneten richten dabei die Magnetpigmente 34, 36 in einem unmittelbar über dem Magneten liegenden Bereich 24 im Wesentlichen senkrecht zur Substratoberfläche aus, während die Vorzugsorientierung der Magnetpigmente in einem weiter vom Kugelmagneten entfernten Bereich 28 im Wesentlichen parallel zur Substratoberfläche verläuft. Die beiden Bereiche 24 und 28 sind durch einen schmalen Übergangsbereich 26 getrennt, in dem die Orientierung der Magnetpigmente rasch von im Wesentlichen senkrechter zu im Wesentlichen paralleler Orientierung übergeht. Die so ausgerichteten Magnetpigmente 34, 36 werden durch Härten des UV-härtenden Bindemittels 32 in ihrer Orientierung dauerhaft fixiert, wie im Querschnitt der Fig. 2(b) gezeigt.

Für eine besonders gute maschinelle Erfassbarkeit weist der innere Bereich 24, in dem die Magnetpigmente im Wesentlichen senkrecht zur Substratoberfläche stehen, einen Durchmesser von 5 mm oder mehr auf.

Die kreisförmige Kennzeichnung 22 ist durch die unterschiedliche Reflexionsrichtung der ausgerichteten Magnetpigmente sichtbar und durch ihr besonderes dreidimensionales Erscheinungsbild und die kinematischen Effekte auch visuell prüfbar. Sie bietet dem Betrachter aufgrund der Ausrichtung der Magnetpigmente nämlich ein effektvolles, dreidimensional anmutendes Erscheinungsbild, scheint sich zudem beim Kippen des Sicherheitselements zu bewegen und erzeugt damit einen kinematischen Effekt mit hohem Aufmerksamkeits- und Wiedererkennungswert. Für eine genauere Beschreibung des Zustandekommens und der Ausgestaltung dieser Effekte wird auf die Druckschriften WO 2009/ 033601 A1 und WO 2009/074284 A2 verwiesen, deren Offenbarung insoweit in die vorliegende Beschreibung aufgenommen wird.

Die Besonderheit der magnetischen Siebdruckfarbe 30 besteht nun darin, dass sie zwei verschiedene magnetisch ausrichtbare, plättchenförmige Magnetpigmente 34, 36 mit unterschiedlichen Eigenschaften enthält, um einerseits eine hohe visuelle Attraktivität und andererseits eine sichere maschinelle Erfassung des Sicherheitselements 12 zu gewährleisten.

Die Magnetpigmente 34, 36 sind jeweils durch die Parameter Eigenfarbe, Koerzitivfeldstärke, Remanenz und NIR-Remission charakterisiert und unterscheiden sich erfindungsgemäß in zumindest einem dieser charakteristischen Parameter signifikant voneinander. Dies bedeutet insbesondere, dass die Magnetpigmente 34, 36 eine Eigenfarbe mit visuell unterschiedlichem Farbton, eine um einen Faktor 1,5 oder mehr unterschiedliche Koerzitivfeldstärke, eine um einen Faktor 1,5 oder mehr unterschiedliche Remanenz und/ oder eine sich um 10% oder mehr unterscheidende integrale NIR-Remission in einem Teilbereich einer Breite von 50 nm im Wellenlängenbereich von 800 nm bis 1500 nm aufweisen.

Im beschriebenen Ausführungsbeispiel ist das Magnetpigment 36 ein optisch variables, magnetisch ausrichtbares Pigment mit einem brillanten Farbeindruck, das vor allem die visuelle Attraktivität des Sicherheitselements 12 sicherstellt. Das Magnetpigment 36 kann beispielsweise einen Farbkippeffekt von Grün nach Blau oder von Gold nach Grün aufweisen. Für den Sicherheitsdruck sind deckende magnetische Pigmente mit Farbkippeffekt erhältlich, beispielsweise magnetische Interferenzpigmente, wie sie in der EP 1 366 380 A2 beschrieben sind, deren Offenbarung zur Herstellung und Eigenschaften solcher Pigmente in die vorliegende Beschreibung aufgenommen wird, und von der Sicpa Holding S.A. beispielsweise unter den Bezeichnungen OVMI Gold/Green 5 SK 1001 S, OVMI Green/Blue 5 SK 5001 S und OVMI Magenta/Green 5 SK 3001 S angeboten werden.

Allerdings hat sich herausgestellt, dass eine maschinelle Erfassbarkeit eines Echtheitsmerkmals, das nur Magnetpigmente 36 enthält, mit Hilfe der magnetischen Eigenschaften der Pigmente nicht oder nur eingeschränkt möglich ist. Um eine solche Nachweismöglichkeit zu eröffnen und damit die Fälschungssicherheit des Sicherheitselements 12 zu erhöhen, enthält die Siebdruckfarbe 30 vielmehr zusätzlich das Magnetpigment 34, das ein magnetisch ausrichtbares Pigment ohne optische Variabilität, aber mit hoher Koerzitivfeldstärke und mit hoher magnetischer Feldstärke im magnetisierten Zustand darstellt. Beispielsweise können die von der Merck KGaA unter der Bezeichnung Colorona Blackstar(R) angeboten Magnetpigmente oder auch andere magnetische, insbesondere auf Mica und Fe₃O₄ basierende Einschicht- oder Mehrschichtpigmente als Magnetpigmente 34 eingesetzt werden.

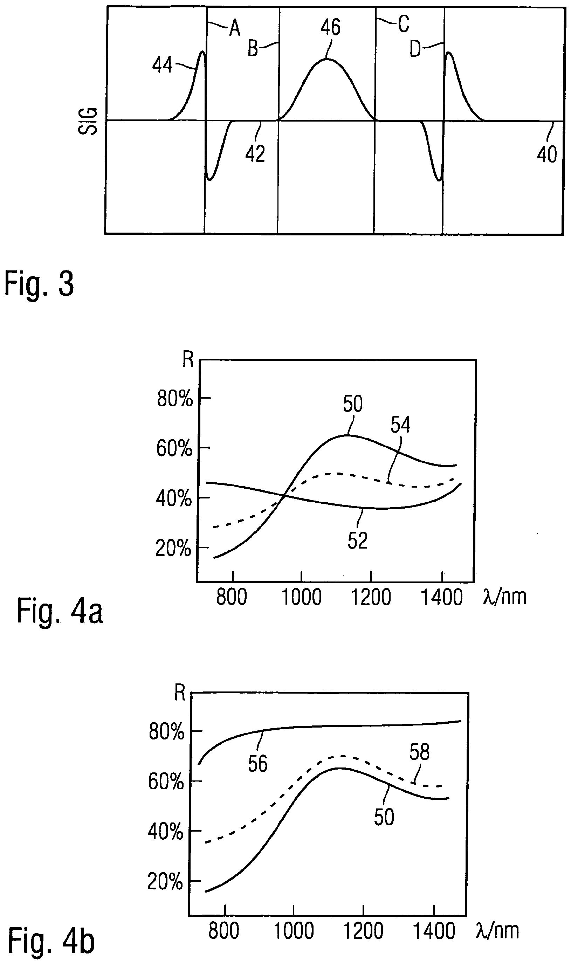

Figur 3 zeigt schematisch eine Messkurve 42 bei der maschinellen Erfassung der Kennzeichnung 22 der Fig. 2(a) entlang einer Erfassungslinie 40. Zur Aufnahme einer derartigen Messkurve 42 wird beispielsweise der Druckbereich 14 zunächst mit einem NdFeB-Permanentmagneten magnetisiert und nach dem Entfernen des äußeren Magnetfelds die Remanenz mit einem GMR (Giant Magneto Resistance)- Magnetsensor entlang der Erfassungslinie 40 gemessen. Beim Abfahren der Erfassungslinie 40 über die Punkte A, B, C und D ergibt sich ein Signalverlauf wie in Fig. 3 dargestellt. Das in beliebigen Einheiten dargestellte Signal des Magnetsensors gibt dabei die lokale magnetische Feldstärke der magnetisierten Magnetpigmente 34, 36 an. Der exakte Kurvenverlauf der Messkurve 42 hängt nicht nur von der Koerzitivfeldstärke der verwendeten Magnetpigmente, sondern auch von dem zur Ausrichtung verwendeten Kugelmagneten und von den Bedingungen beim Aufmagnetisieren und Auslesen des Druckbereichs 14 ab.

Die Messkurve 42 zeigt an den Punkten A und D, die an der linken bzw. rechten Kante des Druckbereichs 14 liegen, jeweils ein starkes Signal 44, das vom Austreten der Magnetfeldlinien an den Kanten des Druckbereichs 14 herrührt. Diese beiden Randsignale 44 treten auch bei nicht ausgerichteten Magnetpigmenten auf und können von dem gemessenen Signal 42 abgezogen werden. Durch die ausgerichteten Magnetpigmente im inneren Bereich 24 der Kennzeichnung 22 tritt auch dort ein Magnetfeld aus dem Druckbereich 14 aus und erzeugt zwischen den Punkten B und C ein Nutzsignal 46 mit der Breite der Kennzeichnung 22. Das Vorliegen bzw. Nicht-Vorliegen der Kennzeichnung 22 kann im Ausführungsbeispiel durch dieses Nutzsignal 46 zweifelsfrei maschinell nachgewiesen werden. Dabei kann auch die Lage des Nutzsignals 46 relativ zu den Randsignalen 44 zur Auswertung herangezogen werden.

Ein ausreichend starkes Nutzsignal 46 ergibt sich jedoch nur, wenn die magnetische Siebdruckfarbe neben den die visuelle Attraktivität sicherstellenden Magnetpigmenten 36 auch die Magnetpigmente 34 enthält, die somit eine magnetische maschinelle Erfassbarkeit ermöglichen. Bei Kontrollmessungen, bei denen das Sensorsignal eines Druckbereichs gemessen wurde, in dem nur die Magnetpigmente 36, nicht aber die Magnetpigmente 34 vorlagen, konnten zwar Randsignale 44 an den Kanten des Druckbereichs 14 erfasst werden, bereits diese waren jedoch für einen verlässlichen Nachweis zu klein. Im inneren Bereich 24 der Kennzeichnung 22 konnte kein verwertbares Nutzsignal mehr erfasst werden.

Neben den magnetischen Eigenschaften unterscheiden sich die Magnetpigmente 34, 36 auch in ihren Absorptionseigenschaften im nahen Infrarot (NIR), worunter im Rahmen dieser Beschreibung der Wellenlängenbereich von 800 nm bis 1500 nm verstanden wird. Wie im technischen Gebiet der Drucktechnik üblich, werden die Infraroteigenschaften aufgedruckter Farbschichten durch die Remission des bedruckten Papiersubstrats angegeben. Eine hohe Remission bedeutet somit, dass die NIR-Absorption der Farbschicht gering ist, während eine geringe Remission auf eine hohe NIR-Absorption der Farbschicht hinweist.

Für die vorliegenden Siebdruckfarben zeigt Fig. 4(a) beispielhaft die Remission R einer Siebdruck-Farbschicht mit nur dem zweiten Magnetpigment 36 (Remissionskurve 50), einer Farbschicht mit nur dem ersten Magnetpigment 34 (Colorona Blackstar(R), Remissionskurve 52) und einer erfindungsgemäßen Farbschicht mit einer Pigmentmischung der ersten und zweiten Magnetpigmente 34, 36 im Anteil 50/50 der beiden Siebdruckfarben (Remissionskurve 54, gestrichelt). Wie zu erwarten, liegt die Remissionskurve 54 der Pigmentmischung zwischen den Kurven 50, 52 der Farbschichten mit jeweils nur einem einzigen Magnetpigment 34 bzw. 36. Obwohl in der Figur nicht explizit dargestellt, ergibt sich bei Steigerung des Anteils an erstem Magnetpigment 34 ein praktisch kontinuierlicher Übergang von der Remissionskurve 50 zur Remissionskurve 52. Wie aus Fig. 4(a) weiter ersichtlich, nimmt die Remission der Farbschicht mit zunehmendem Anteil des ersten Magnetpigments 34 bei einer Wellenlänge von 800 nm zu, während sie bei einer Wellenlänge von 1200 nm abnimmt.

Figur 4(b) zeigt ein weiteres Ausführungsbeispiel einer erfindungsgemäßen Siebdruck-Farbschicht, bei der das erste Magnetpigment 34 durch ein anderes magnetisch ausrichtbares, plättchenförmiges Magnetpigment gebildet ist, nämlich durch das in der WO 2010/149266 A1 offenbarte mehrschichtige Magnetpigment. Solche Magnetpigmente weisen insbesondere einen Träger und eine auf dem Träger aufgebrachte Schicht auf, wobei der Träger von Al₂O₃, Al₂O₃ mit bis zu 5 Gew.-% TiO₂, SiO₂, SiO₂ mit bis zu 20 Gew.-% Siliziumhydroxid, Glas oder Borosilikat gewählt ist und die Schicht Eisenoxid, insbesondere gamma-Eisenoxid, das mit mindestens einem Erdalkalimetalloxid, bevorzugt MgO, dotiert ist, enthält.

Figur 4(b) zeigt im nahen Infrarot die Remission R einer Farbschicht mit nur dem zweiten Magnetpigment 36 (Remissionskurve 50), einer Farbschicht mit nur dem ersten Magnetpigment (Remissionskurve 56) und einer erfindungsgemäßen Farbschicht mit einer Pigmentmischung der ersten und zweiten Magnetpigmente im Anteil 50/50 der beiden Siebdruckfarben (Remissionskurve 58, gestrichelt). Auch hier kann durch eine Steigerung des Anteils an erstem Magnetpigment ein praktisch kontinuierlicher Übergang von der Remissionskurve 50 zur Remissionskurve 56 erreicht werden. Wie aus Fig. 4(b) weiter ersichtlich, nimmt in diesem Ausführungsbeispiel die Remission der Farbschicht mit zunehmendem Anteil des ersten Magnetpigments im gesamten NIR-Bereich zu, die NIR-Absorption der Farbschicht also ab.

Im Rahmen der vorliegenden Beschreibung beziehen sich die angegebenen Anteilsverhältnisse immer auf das Gewichtsverhältnis der zur Herstellung der erfindungsgemäßen Siebdruckfarbe eingesetzten, das erste bzw. das zweite Magnetpigment enthaltenden Siebdruckfarben. Die das erste Magnetpigment enthaltenden Siebdruckfarben liegen dabei mit einer Magnetpigment-Konzentration von 15 Gew.-% in einem UV-härtenden Bindemittel vor. Zur Herstellung der erfindungsgemäßen Siebdruckfarbe wurde diese Siebdruckfarbe dann im angegebenen Anteil (z. B. 50/50) mit der das zweite Magnetpigment enthaltenen Siebdruckfarbe, z. B. einer von der Sicpa Holding S.A. unter der Bezeichnung OVMI Gold/Green 5 SK 1001 S, OVMI Green/Blue 5 SK 5001 S oder OVMI Magenta/Green 5 SK 3001 S angebotenen Siebdruckfarbe, gemischt.

Ausgehend von dem zweiten Magnetpigment 36 (Remissionskurve 50) kann die NIR-Remission einer erfindungsgemäßen Siebdruckfarbe durch Hinzufügung eines Anteils an erstem Magnetpigment (Remissionskurve 52 in Fig. 4(a) bzw. Remissionskurve 56 in Fig. 4(b)) somit in einem weiten Bereich nach Wunsch eingestellt werden. Die Remission der Pigmentmischung kann dabei gegenüber einer Farbschicht mit dem zweiten Magnetpigment 36 allein sowohl erhöht als auch erniedrigt werden, wie in den Figuren 4(a) und (b) illustriert.

Die Messung der NIR-Remission erfolgt üblicherweise nicht bei einer einzigen Wellenlänge, sondern durch Messung eines breiten Remissionsspektrums. Allerdings kann durch Verwendung von Sensoren mit bestimmten Empfindlichkeitsbereichen oder durch den Einsatz entsprechender Filter je nach Bedarf auch nur ein Teilbereich des NIR-Spektrums erfasst werden. Die Messung der NIR-Remission kann beispielsweise mit einem Datacolor Microflash 45 NIR an Siebdruckmustern auf Baumwoll-Velinpapier durchgeführt werden.

Die erfindungsgemäßen magnetischen Siebdruckfarben erlauben nicht nur, die Magneteigenschaften und die NIR-Remission der Siebdruckfarbe maßzuschneidern, sondern ermöglichen auch, den optischen Eindruck der Farbe zu variieren. Geht man beispielsweise von einem optisch variablen zweiten Magnetpigment 36 aus, das einen Farbkippeffekt von Magenta zu Grün zeigt, wie z. B. das von der Sicpa Holding S.A. unter der Bezeichnung OVMI Magenta/Green 5 SK 3001 S angebotene Magnetpigment, so kann durch Zugabe verschieden großer Anteile eines goldfarbenen, im Wesentlichen optisch nicht variablen, ersten Magnetpigments 34 eine visuell attraktive Palette magnetischer Siebdruckfarben erzeugt werden. Mit zunehmendem Anteil an erstem Magnetpigment verändern sich dabei sowohl die Farborte des Farbkippeffekts als auch der Farbunterschied zwischen senkrechter und schräger Betrachtungsrichtung und führen so zu einem erweiterten Farbspiel.

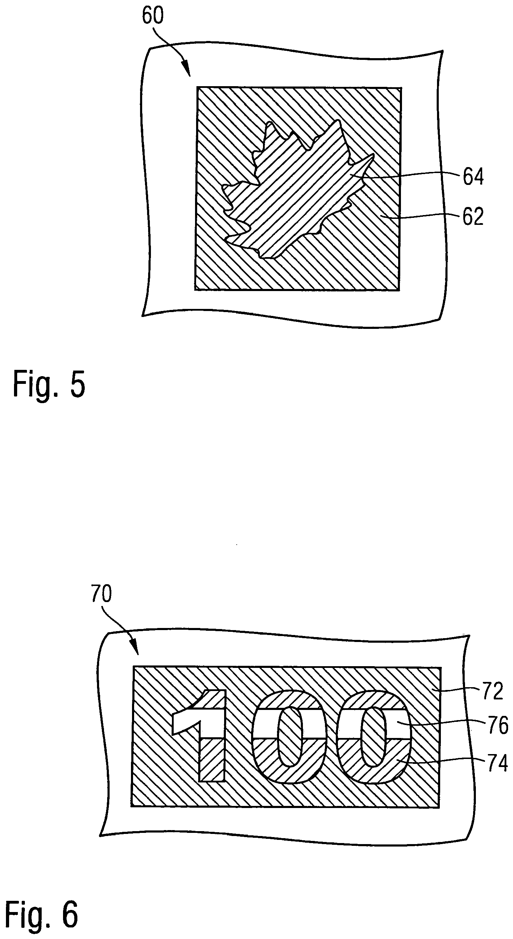

Bei einem weiteren Ausführungsbeispiel der Erfindung, das nunmehr mit Bezug auf Fig. 5 näher beschrieben wird, enthält ein erfindungsgemäßes Sicherheitselement 60 neben einem ersten Druckbereich 62 einen angrenzenden zweiten Druckbereich 64, wobei der erste Druckbereich 62 mit einer ersten erfindungsgemäßen Siebdruckfarbe und der zweite Druckbereich 64 mit einer zweiten, von der ersten Siebdruckfarbe unterschiedlichen erfindungsgemäßen Siebdruckfarbe bedruckt ist.

Die beiden Druckbereiche 62, 64 stoßen dabei passergenau aneinander und sind in Form eines Motivs, beispielsweise des in Fig. 5 gezeigten Ahornblatts angeordnet, bei dem der zweite Druckbereich 64 den Innenbereich des ersten Druckbereichs 62 bildet.

Die für die beiden Druckbereiche 62, 64 verwendeten magnetischen Siebdruckfarben sind nun so aufeinander abgestimmt, dass die beiden Druckbereiche 62, 64 visuell im Wesentlichen denselben Farbton aufweisen, sich jedoch in ihrer NIR-Remission signifikant unterscheiden. Das von den Druckbereichen 62, 64 gebildet Motiv "Ahornblatt" ist für einen Betrachter visuell somit praktisch nicht erkennbar, während es beim maschinellen Auslesen mit einem IR-Sensor aufgrund der unterschiedlichen NIR-Remission der beiden Druckbereiche 62, 64 leicht erfassbar ist.

Um diesen Effekt zu erzielen, enthalten die erste und zweite erfindungsgemäße Siebdruckfarbe als zweites Magnetpigment 36 jeweils dasselbe optisch variable Magnetpigment, das für einen brillanten Farbeindruck und damit für die visuelle Attraktivität des Sicherheitselements 60 ausgewählt ist. Die erste und zweite Siebdruckfarbe unterschieden sich jedoch im ihrem ersten Magnetpigment 34, wobei die erste Siebdruckfarbe die oben genannten, in der WO 2010/149266 A1 offenbarten mehrschichtigen Magnetpigmente und die zweite Siebdruckfarbe die oben genannten Colorona Blackstar(R)-Magnetpigmente enthält.

Im Ausführungsbeispiel enthalten die beiden Siebdruckfarben das optisch variable Magnetpigment 36 jeweils im gleichen Anteil an der Gesamtmenge an Magnetpigment, nämlich jeweils im Anteil 90/10 der in der erfindungsgemäßen Siebdruckfarbe gemischten Siebdruckfarben. In anderen Gestaltungen sind selbstverständlich auch andere Anteilsverhältnisse, wie etwa 80/20, 70/30, 60/40 oder 50/50 möglich, die visuell ebenfalls sehr ähnliche Farbtöne ergeben und sich dennoch in ihren Absorptionseigenschaften im nahen Infrarot für eine Erkennung ausreichend stark unterscheiden. Auch unterschiedliche Anteilsverhältnisse in den beiden Druckbereichen sind selbstverständlich möglich.

Um die visuellen Farbtöne der beiden Druckbereiche 62, 64 einander möglichst gut anzugleichen, kann eine oder beide der erfindungsgemäßen Siebdruckfarben zusätzlich ein Buntpigment oder einen Farbstoff enthalten. Ist beispielsweise das erste Magnetpigment der ersten Siebdruckfarbe brillanter und farbreiner als das erste Magnetpigment der zweiten Siebdruckfarbe, so können die Farbtöne durch Zugabe von Buntpigmenten zur ersten Siebdruckfarbe angeglichen werden.

Figur 6 zeigt ein Sicherheitselement 70 nach einem weiteren Ausführungsbeispiel der Erfindung. Das Sicherheitselement 70 stellt als Motiv die Wertzahl "100" der Banknote 10 dar und enthält einen ersten Druckbereich 72 und einen passergenau angrenzenden zweiten Druckbereich 74. Die Druckbereiche 72, 74 sind jeweils mit farbtongleichen, sich aber in ihrer NIR-Remission unterscheidenden, magnetischen Siebdruckfarben nach der Erfindung bedruckt. Zusätzlich sind die Magnetpigmente des zweiten Druckbereichs 74 in einem streifenförmigen Bereich 76 magnetisch ausgerichtet, so dass sich beim Kippen des Sicherheitselements 70 bzw. der damit versehenen Banknote ein kinematischer Effekt in Form eines optisch laufenden Balkens 76 ergibt.

Bei diesem Ausführungsbeispiel kann das von den Druckbereichen 72, 74 gebildete Motiv der Wertzahl "100" aufgrund des kinematischen Effekts des laufenden Balkens trotz der sehr ähnlichen Farbtöne der beiden Druckbereiche 72, 74 auch visuell erkannt werden, insbesondere wenn das Sicherheitselement 70 hin und her gekippt wird. Die farbtongleichen und dennoch visuell unterscheidbaren Druckbereiche 72, 74 stellen so ein optisch attraktives Echtheitsmerkmal mit hohem Aufmerksamkeits- und Wiedererkennungswert dar. Gleichzeitig gestattet die unterschiedliche NIR-Remission der Druckbereiche 72, 74 eine sichere maschinelle Erfassung und Prüfung des Sicherheitselements 70.

Anstelle einer unterschiedlichen NIR-Remission können selbstverständlich auch unterschiedliche Magneteigenschaften der beiden Druckbereiche für die maschinelle Erfassung eingesetzt werden.

Für alle beschriebenen Sicherheitselemente können anstelle der beispielhaft beschriebenen binären Gemische mit zwei unterschiedlichen Magnetpigmenten auch ternäre Gemische mit drei unterschiedlichen Magnetpigmenten eingesetzt werden. Eine solche ternäre magnetische Siebdruckfarbe enthält drei unterschiedliche Magnetpigmente, die sich paarweise in zumindest einem der oben genannten charakteristischen Parameter signifikant unterscheiden. Bei den Ausführungsbeispielen der Figuren 5 und 6 können sich die beiden farbtongleichen Druckbereiche sowohl in ihren NIR-Remissionen als auch in ihren magnetischen Eigenschaften unterscheiden.

### Bezugszeichenliste

- 10: Banknote
- 12: Sicherheitselement
- 14: Druckbereich
- 20: Substrat
- 22: Kennzeichnung
- 24: innerer Bereich
- 26: Übergangsbereich
- 28: entfernter Bereich
- 30: Siebdruckfarbe
- 32: Bindemittel
- 34: erste Magnetpigmente
- 36: zweite Magnetpigmente
- 40: Erfassungslinie
- 42: Messkurve
- 44: Randsignale
- 46: Nutzsignal
- 50,52, 54,56, 58: Remissionskurven
- 60: Sicherheitselement
- 62: erster Druckbereich
- 64: zweiter Druckbereich
- 70: Sicherheitselement
- 72: erster Druckbereich
- 74: zweiter Druckbereich
- 76: streifenförmiger Bereich

## Patentansprüche

1. Magnetische Siebdruckfarbe oder Flexodruckfarbe mit einem Bindemittel und magnetisch ausrichtbaren, plättchenförmigen Magnetpigmenten, die durch die Parameter Eigenfarbe, Koerzitivfeldstärke, Remanenz und NIR-Remission charakterisiert sind, **dadurch gekennzeichnet, dass** die Siebdruckfarbe oder Flexodruckfarbe zumindest zwei unterschiedliche magnetisch ausrichtbare, plättchenförmige Magnetpigmente enthält, die sich in zumindest einem der charakteristischen Parameter signifikant unterscheiden, insbesondere dass die Magnetpigmente eine Eigenfarbe mit visuell unterschiedlichem Farbton, eine um einen Faktor 1,5 oder mehr unterschiedliche Koerzitivfeldstärke, eine um einen Faktor 1,5 oder mehr unterschiedliche Remanenz und/oder eine sich um 10% oder mehr unterscheidende integrale NIR-Remission in einem Teilbereich einer Breite von 50 nm aufweisen, wobei der Teilbereich im Wellenlängenbereich von 800 nm bis 1500 nm liegt.

2. Magnetische Siebdruckfarbe oder Flexodruckfarbe nach Anspruch 1, **dadurch gekennzeichnet, dass** ein erstes der unterschiedlichen Magnetpigmente im Wesentlichen optisch nicht variabel, und ein zweites der unterschiedlichen Magnetpigmente optisch variabel ist.

3. Magnetische Siebdruckfarbe oder Flexodruckfarbe nach Anspruch 1 oder 2, **dadurch gekennzeichnet, dass** das erste Magnetpigment bei einer Wellenlänge von 800 nm und bei einer Wellenlänge von 1200 nm jeweils eine um mehr als 10% höhere NIR-Remission aufweist als das zweite Magnetpigment, oder dass das erste Magnetpigment bei einer Wellenlänge von 800 nm eine um mehr als 10% höhere und bei einer Wellenlänge von 1200 nm eine um mehr als 10% geringere NIR-Remission aufweist als das zweite Magnetpigment.

4. Magnetische Siebdruckfarbe oder Flexodruckfarbe nach Anspruch 1, **dadurch gekennzeichnet, dass** im Wesentlichen keines der Magnetpigmente optisch variabel ist, insbesondere dass das erste Magnetpigment bei einer Wellenlänge von 800 nm und bei einer Wellenlänge von 1200 nm jeweils eine um mehr als 10% höhere NIR-Remission aufweist als das zweite Magnetpigment.

5. Magnetische Siebdruckfarbe oder Flexodruckfarbe nach Anspruch 1, **dadurch gekennzeichnet, dass** die Siebdruckfarbe oder Flexodruckfarbe drei unterschiedliche Magnetpigmente enthält, die sich paarweise in zumindest einem der charakteristischen Parameter signifikant unterscheiden, insbesondere dass die Magnetpigmente paarweise eine Eigenfarbe mit visuell unterschiedlichem Farbton, eine um einen Faktor 1,5 oder mehr unterschiedliche Koerzitivfeldstärke, eine um einen Faktor 1,5 oder mehr unterschiedliche Remanenz und/oder eine sich um 10% oder mehr unterscheidende integrale NIR-Remission in einem Teilbereich einer Breite von 50 nm aufweisen, wobei der Teilbereich im Wellenlängenbereich von 800 nm bis 1500 nm liegt.

6. Magnetische Siebdruckfarbe oder Flexodruckfarbe nach wenigstens einem der Ansprüche 1 bis 5, **dadurch gekennzeichnet, dass** die Siebdruckfarbe oder Flexodruckfarbe ein UV-härtendes Bindemittel enthält.

7. Sicherheitselement mit einem ersten Druckbereich, der mit einer ersten magnetischen Siebdruckfarbe oder Flexodruckfarbe nach einem der Ansprüche 1 bis 6 bedruckt ist.

8. Sicherheitselement nach Anspruch 7, **dadurch gekennzeichnet, dass** die Magnetpigmente der ersten magnetischen Siebdruckfarbe oder Flexodruckfarbe in dem ersten Druckbereich magnetisch ausgerichtet sind.

9. Sicherheitselement nach Anspruch 7 oder 8, mit dem ersten Druckbereich und einem angrenzenden zweiten Druckbereich, wobei der erste Druckbereich mit der ersten magnetischen Siebdruckfarbe oder Flexodruckfarbe bedruckt und der zweite Druckbereich mit einer zweiten, unterschiedlichen magnetischen Siebdruckfarbe oder Flexodruckfarbe nach einem der Ansprüche 1 bis 6 bedruckt ist.

10. Sicherheitselement nach Anspruch 9, **dadurch gekennzeichnet, dass** die beiden Druckbereiche visuell denselben Farbton aufweisen, sich jedoch in ihrer NIR- Remission signifikant unterscheiden, insbesondere, dass sich die integrale NIR-Remission der beiden Druckbereiche in einem Teilbereich einer Breite von 50 nm im Wellenlängenbereich von 800 nm bis 1500 nm um 10% oder mehr, vorzugsweise um 20% oder mehr unterscheidet, und/oder dass die beiden Druckbereiche visuell denselben Farbton aufweisen, sich jedoch in ihren Magneteigenschaften signifikant unterscheiden, insbesondere, dass sich die Koerzitivfeldstärke und/oder die Remanenz der beiden Druckbereiche um 10% oder mehr, vorzugsweise um 20% oder mehr unterscheidet.

11. Sicherheitselement nach einem der Ansprüche 9 bis 10, **dadurch gekennzeichnet, dass** die erste und zweite magnetische Siebdruckfarbe oder Flexodruckfarbe als zweites Magnetpigment jeweils dasselbe optisch variable Magnetpigment enthalten und als erstes Magnetpigment jeweils unterschiedliche, im Wesentlichen optisch nicht variable Magnetpigmente.

12. Sicherheitselement nach einem der Ansprüche 9 bis 11, **dadurch gekennzeichnet, dass** zumindest eine der Siebdruckfarben oder Flexodruckfarben zusätzlich ein Buntpigment oder einen Farbstoff enthält.

13. Sicherheitselement nach einem der Ansprüche 9 bis 12, **dadurch gekennzeichnet, dass** die Magnetpigmente in einem oder beiden Druckbereichen magnetisch ausgerichtet sind.

14. Sicherheitselement nach einem der Ansprüche 9 bis 13, **dadurch gekennzeichnet, dass** der erste und zweite Druckbereich passergenau aneinander stoßen.

15. Sicherheitselement nach einem der Ansprüche 9 bis 14, **dadurch gekennzeichnet, dass** die beiden Druckbereiche in Form von Mustern, Zeichen oder einer Codierung angeordnet sind, wobei insbesondere der zweite Druckbereich den Innenbereich des ersten Druckbereichs bildet.

16. Verfahren zum Herstellen eines Sicherheitselements nach einem der Ansprüche 9 bis 15, bei dem ein erster Druckbereich und ein angrenzender zweiter Druckbereich mit unterschiedlichen magnetischen Siebdruckfarben oder Flexodruckfarben, jeweils nach einem der Ansprüche 1 bis 6, bedruckt werden, wobei optional die Magnetpigmente der magnetischen Siebdruckfarben oder Flexodruckfarben in einem oder beiden Druckbereichen magnetisch ausgerichtet werden.

## Claims

1. A magnetic screen printing ink or flexographic ink having a binder and magnetically alignable, platelet-shaped magnetic pigments that are **characterized by** the parameters inherent color, coercive field strength, remanence and NIR remission, **characterized in that** the screen printing ink or flexographic ink includes at least two different magnetically alignable, platelet-shaped magnetic pigments that differ significantly in at least one of the characteristic parameters, especially **in that** the magnetic pigments exhibit an inherent color having a visually different hue, a coercive field strength that differs by a factor of 1.5 or more, a remanence that differs by a factor of 1.5 or more and/or an integral NIR remission differing by 10% or more in a sub-region having a width of 50 nm, the sub-region lying in the wavelength range from 800 nm to 1,500 nm.

2. The magnetic screen printing ink or flexographic ink according to claim 1, **characterized in that** a first of the differing magnetic pigments is substantially optically non-variable, and a second of the differing magnetic pigments is optically variable.

3. The magnetic screen printing ink or flexographic ink according to claim 1 or 2, **characterized in that**, at a wavelength of 800 nm and at a wavelength of 1,200 nm, the first magnetic pigment exhibits, in each case, a more than 10% higher NIR remission than the second magnetic pigment, or that, at a wavelength of 800 nm, the first magnetic pigment exhibits a more than 10% higher, and at a wavelength of 1,200 nm, a more than 10% lower NIR remission than the second magnetic pigment.

4. The magnetic screen printing ink or flexographic ink according to claim 1, **characterized in that** substantially none of the magnetic pigments is optically variable, especially, that the first magnetic pigment exhibits, at a wavelength of 800 nm and at a wavelength of 1,200 nm, in each case, a more than 10% higher NIR remission than the second magnetic pigment.

5. The magnetic screen printing ink or flexographic ink according to claim 1, **characterized in that** the screen printing ink or flexographic ink includes three different magnetic pigments that, in pairs, differ significantly in at least one of the characteristic parameters, especially **in that** the magnetic pigments exhibit, in pairs, an inherent color having a visually different hue, a coercive field strength that differs by a factor of 1.5 or more, a remanence that differs by a factor of 1.5 or more and/or an integral NIR remission differing by 10% or more in a sub-region having a width of 50 nm, the sub-region lying in the wavelength range from 800 nm to 1,500 nm.

6. The magnetic screen printing ink or flexographic ink according to at least one of claims 1 to 5, **characterized in that** the screen printing ink or flexographic ink includes a UV-curing binder.

7. A security element having a first print region that is printed using a first magnetic screen printing ink or flexographic ink according to one of claims 1 to 6.

8. The security element according to claim 7, **characterized in that** the magnetic pigments of the first magnetic screen printing ink or flexographic ink are magnetically aligned in the first print region.

9. The security element according to claim 7 or 8, having the first print region and an adjoining second print region, the first print region being printed using the first magnetic screen printing ink or flexographic ink, and the second print region being printed using a second, different magnetic screen printing ink or flexographic ink according to one of claims 1 to 6.

10. The security element according to claim 9, **characterized in that** the two print regions exhibit the same hue visually, but differ significantly in their NIR remission, especially **in that**, in a sub-region having a width of 50 nm, the integral NIR remission of the two print regions differs by 10% or more, preferably by 20% or more, in the wavelength range from 800 nm to 1,500 nm, and/or that the two print regions exhibit the same hue visually, but differ significantly in their magnetic properties, especially **in that** the coercive field strength and/or the remanence of the two print regions differs by 10% or more, preferably by 20% or more.

11. The security element according to one of claims 9 to 10, **characterized in that** the first and second magnetic screen printing ink or flexographic ink each include, as the second magnetic pigment, the same optically variable magnetic pigment, and as the first magnetic pigment, different, substantially optically non-variable magnetic pigments.

12. The security element according to one of claims 9 to 11, **characterized in that** at least one of the screen printing inks or flexographic inks additionally includes a colored pigment or a dye.

13. The security element according to one of claims 9 to 12, **characterized in that** the magnetic pigments are magnetically aligned in one or both print regions.

14. The security element according to one of claims 9 to 13, **characterized in that** the first and second print region meet each other in perfect register.

15. The security element according to one of claims 9 to 14, **characterized in that** the two print regions are arranged in the shape of patterns, characters or a code, the second print region especially forming the inner region of the first print region.

16. A method for manufacturing a security element according to one of claims 9 to 15, in which a first print region and an adjoining second print region are printed using different magnetic screen printing inks or flexographic inks, each according to one of claims 1 to 6, the magnetic pigments of the magnetic screen printing inks or flexographic inks optionally being magnetically aligned in one or both print regions.

## Revendications

1. Encre de sérigraphie magnétique ou encre d'impression flexographique magnétique avec un liant et des pigments magnétiques en forme de plaquettes, magnétiquement orientables, qui sont **caractérisées par** les paramètres de couleur propre, d'intensité de champ coercitif, de rémanence et de rémission à infrarouge proche, **caractérisée en ce que** l'encre de sérigraphie ou l'encre flexographique contient au moins deux pigments magnétiques différents, en forme de plaquettes, magnétiquement orientables, qui se différencient de façon significative dans au moins un des paramètres caractéristiques, en particulier **en ce que** les pigments magnétiques comportent une couleur propre avec une nuance de couleur visuellement différente, une intensité de champ coercitif différente d'un facteur de 1,5 ou plus, une rémanence différente d'un facteur de 1,5 ou plus et/ou une rémission à infrarouge proche intégrale se différenciant de 10 % ou plus dans une partie de zone d'une largeur de 50 nm, sachant que la partie de zone se situe dans une plage de longueurs d'ondes de 800 nm à 1500 nm.

2. Encre de sérigraphie magnétique ou encre d'impression flexographique magnétique selon la revendication 1, **caractérisée en ce qu'**un premier des pigments magnétiques différents n'est pour l'essentiel optiquement pas variable et un deuxième des pigments magnétiques différents est optiquement variable.

3. Encre de sérigraphie magnétique ou encre d'impression flexographique magnétique selon la revendication 1 ou 2, **caractérisée en ce que** le premier pigment magnétique comporte à une longueur d'ondes de 800 nm et à une longueur d'ondes de 1200 nm respectivement une rémission à infrarouge proche supérieure de plus de 10 % au deuxième pigment magnétique ou **en ce que** le premier pigment magnétique comporte à une longueur d'ondes de 800 nm et une rémission à infrarouge proche supérieure de plus de 10 % et à une longueur d'ondes de 1200 nm une rémission à infrarouge proche inférieure de plus de 10 % au deuxième pigment magnétique.

4. Encre de sérigraphie magnétique ou encre d'impression flexographique magnétique selon la revendication 1, **caractérisée en ce que** pour l'essentiel aucun des pigments magnétiques n'est optiquement variable, en particulier **en ce que** le premier pigment magnétique comporte à une longueur d'ondes de 800 nm et à une longueur d'ondes de 1200 nm respectivement une rémission à infrarouge proche supérieure de plus de 10 % au deuxième pigment magnétique.

5. Encre de sérigraphie magnétique ou encre d'impression flexographique magnétique selon la revendication 1, **caractérisée en ce que** l'encre de sérigraphie ou l'encre flexographique contient trois pigments magnétiques différents, qui se différencient par paires de façon significative dans au moins un des paramètres caractéristiques, en particulier **en ce que** les pigments magnétiques comportent par paires une couleur propre avec une nuance de couleur visuellement différente, une intensité de champ coercitif différente d'un facteur de 1,5 ou plus, d'une rémanence différente d'un facteur de 1,5 ou plus et/ou une rémission à infrarouge proche intégrale différente de 10 % ou plus dans une partie de zone d'une largeur de 50 nm, sachant que la partie de zone se situe dans une plage de longueurs d'ondes de 800 nm à 1500 nm.

6. Encre de sérigraphie magnétique ou encre d'impression flexographique magnétique selon au moins l'une quelconque des revendications 1 à 5, **caractérisée en ce que** l'encre sérigraphique ou l'encre flexographique contient un liant durcissant aux UV.

7. Elément de sécurité avec une première zone d'impression, qui est imprimée avec une première encre de sérigraphie magnétique ou encre d'impression flexographique magnétique selon l'une quelconque des revendications 1 à 6.

8. Elément de sécurité selon la revendication 7, **caractérisée en ce que** les pigments magnétiques de la première encre de sérigraphie magnétique ou encre flexographique magnétique sont orientés magnétiquement dans la première zone d'impression.

9. Elément de sécurité selon la revendication 7 ou 8, avec la première zone d'impression et une deuxième zone d'impression limitrophe, sachant que la première zone d'impression est imprimée avec la première encre de sérigraphie magnétique ou encre flexographique magnétique et la deuxième zone d'impression est imprimée avec une deuxième encre de sérigraphique magnétique ou encre flexographique magnétique différente selon l'une quelconque des revendications 1 à 6.

10. Elément de sécurité selon la revendication 9, **caractérisée en ce que** les deux zones d'impression comportent visuellement la même nuance de couleur, se différencient toutefois de façon significative dans leur rémission à infrarouge proche, en particulier **en ce que** la rémission à infrarouge proche intégrale des deux zones d'impression se différencie dans une partie de zone d'une largeur de 50 nm dans la plage de longueurs d'ondes de 800 nml à 1500 nm de 10 % ou plus, de préférence de 20 % ou plus et/ou **en ce que** les deux zones d'impression comportent visuellement la même nuance de couleur se différencient toutefois de façon significative dans leurs propriétés magnétiques, en particulier, **en ce que** l'intensité de champ coercitif et/ou la rémanence des deux zones d'impression se différencie de 10 % ou plus, de préférence de 20 % ou plus.

11. Elément de sécurité selon l'une quelconque des revendications 9 à 10, **caractérisée en ce que** la première ou la deuxième encre de sérigraphie magnétique ou encre flexographique magnétique contiennent respectivement même pigment magnétique optiquement variable et en tant que deuxième pigment magnétique et respectivement des pigments magnétiques différents, pour l'essentiel optiquement non variables en tant que premier pigment magnétique.

12. Elément de sécurité selon l'une quelconque des revendications 9 à 11, **caractérisée en ce qu'**au moins une des encres de sérigraphie ou encres d'impression flexographiques contient en plus un pigment de couleur ou une substance colorante.

13. Elément de sécurité selon l'une quelconque des revendications 9 à 12, **caractérisée en ce que** les pigments magnétiques sont orientés magnétiquement dans une ou dans les deux zones d'impression.

14. Elément de sécurité selon l'une quelconque des revendications 9 à 13, **caractérisée en ce que** la première et la deuxième zone d'impression se touchent de façon précise.

15. Elément de sécurité selon l'une quelconque des revendications 9 à 14, **caractérisée en ce que** les deux zones d'impression sont disposées en forme de motifs, de signes ou d'une codification, sachant qu'en particulier la deuxième zone d'impression forme la zone intérieure de la première zone d'impression.

16. Procédé de fabrication d'un élément de sécurité selon l'une quelconque des revendications 9 à 15, pour lequel une première zone d'impression et une deuxième zone d'impression limitrophe sont imprimées avec des encres sérigraphiques magnétiques ou des encres flexographiques magnétiques différentes, respectivement selon l'une quelconque des revendications 1 à 6, sachant que les pigments magnétiques des encres sérigraphiques magnétiques ou des encres flexographiques sont en option orientées magnétiquement dans une ou dans les deux zones d'impression.
